# EUROPEAN PATENT APPLICATION

(11) **EP 1 964 480 A1**
(43) Date of publication of application: **03.09.2008**
(21) Application number: 06842862.2
(22) Date of filing: 18.12.2006
(51) Int. Cl.: A23L 1/10, C12C 1/16

(54) **METHOD FOR PROCESSING SPROUTED CEREAL, MALT PRODUCT, FERMENTED MALT DRINK AND FOOD AND DRINK**

(30) Priority: 19.12.2005 JP 2005365629
(71) Applicant: SUNTORY LIMITED, Osaka-shi, Osaka 530-8203 (JP)
(72) Inventor: NAKAHARA, Koichi, Osaka 618-0001 (JP); SAWADA, Masako, Osaka 618-8503 (JP); YAMADA, Daisuke, Tokyo 135-8631 (JP)
(74) Representative: Vossius & Partner
(86) International application number: PCT/JP2006/325195
(87) International publication number: WO 2007/072780

(57) **Abstract**

A method for processing a sprouted cereal in which an enzymatic activity in the sprouted cereal is reduced by bringing the sprouted cereal into contact with water vapor.

## Description

### TECHNICAL FIELD

The present invention relates to a technique for processing a sprouted cereal, as well as a malt product, a fermented malt drink, and a food and drink in which the same is used.

### BACKGROUND ART

Examples of sprouted cereals include sprouted brown rice, wheat, barley (malt), soybeans, and corn kernels. These are rich in a matrix of starch, and the like, as well as a variety of effective components, and the like, and they are therefore widely used as the starting materials for many food and drinks. In particular, it is known that malt has a high content of effective components such as glycine betaine, which is related sweetness and good flavor, and γ-aminobutyric acid, which has hypertension-inhibiting effects, calms nerves, and has liver function-improving effects.
A variety of effective components can be produced during sprouting via the effect of a variety of enzymes present in a sprouted cereal; therefore, the nutritional value of a sprouted cereal is higher than that of an unsprouted cereal.
Furthermore, various enzymes present in a sprouted cereal are responsible for energy production by the germ and root from the beginning until the cereal sprouts and photosynthesis begins. For instance, a method is widely known whereby the effect of such enzymes is utilized to process a sprouted cereal and produce a food or drink such as when the amylase activity of malt is used to produce a beer drink from malt.
Consequently, conventional methods for processing a sprouted cereal are generally performed in an attempt to inhibit as much as possible the degeneration or decomposition that leads to a reduction in the effective components and the like contained in the sprouted cereal, as well as the deactivation of the various enzymes in the sprouted cereal.

Nevertheless, there are also exceptional methods whereby the enzymes present include enzymes that are not useful in the production of a food or drink using a sprouted cereal as the starting material and once these enzymes have been identified, sprouted cereal is processed such that this enzyme activity is inhibited.
For example, the enzyme called lipoxygenase that is present in malt is an enzyme that participates in the oxidation of fatty acids. This enzyme oxidizes the fatty acids (particularly linoleic acid) contained in the wort that is produced during the production of a beer drink and produces 9-hydroperoxydooctadecanoic acid (9-HPOD: a type of lipid peroxide). When beer drinks are produced and stored, the 9-HPOD is converted to trans-2-nonenal (T2N: a type of aldehyde), which is the source of a cardboard-like odor (a peculiar foul odor given off by degraded beer drinks). Consequently, it appears that inhibiting lipoxygenase activity (LOX activity hereafter) inhibits 9-HPOD production and this results in it being possible to prevent T2N generation and effectively maintain the beer drink quality.

Therefore, in order to maintain the quality of such a beer drink, there is a method whereby barley is screened for a type having low (or no) LOX activity and this type of barley is used to produce the beer drink; a method whereby barley that has been roasted in a warm current of air to reduce LOX activity is used to produce a beer drink, and the like (refer to Patent Reference 1).
Patent Reference 1: Japanese Laid-open Patent Application 2005-102690

### DISCLOSURE OF THE INVENTION

### Problems That the Invention Is Intended to Solve

Nevertheless, according to the method whereby the barley is screened for a type having low LOX activity, it is first necessary to screen the many types of barley that exist in order to find a barley having low (or no) LOX activity and then grow that barley. Consequently, it takes considerable time, labor, and expense until large amounts of such barley having a low LOX activity can be supplied with stability, and there is the risk that this will lead to a large increase in cost. Furthermore, substances that are the source of a foul odor when a beer drink is stored are not limited to the above-mentioned T2N. Strecker aldehydes, which are generated when the amino acids produced by the protease present in malt react with the sugar in malt, can become the source of a foul odor. Therefore, it has not been possible to sufficiently inhibit the generation of a foul odor by simply inhibiting LOX activity.

The method cited in Patent Reference 1 is a method performed during the malting step (step for producing malt from barley); therefore, it is difficult to use with existing commonly available malt (dry malt). If the method is used on commonly available malt, there is a chance that the malt will be burned. Furthermore, this method is a method whereby the malt is roasted using a warm current of air at normal pressure and must be slowly performed over a period of hours (several hours to several tens of hours) under precise temperature control such that the malt is not burned. According to this method, it becomes more difficult to uniformly and quickly control temperature as the amount of starting material increases; therefore, it is very time consuming and the treatment procedure is complex. In addition, in order to sufficiently reduce LOX activity by this method, the malt is inevitably discolored and the use of the malt thereafter is limited. Furthermore, there is also a problem with the method cited in Patent Reference 1 in that because a warm current of air is used, the effective components such as γ-aminobutyric acid contained in the malt are reduced by pyrolysis and polymerization.

The present invention was devised in light of the above-mentioned problems, and provides a method for processing a sprouted cereal which can be used for a variety of sprouted cereals, such as commonly available dry cereal, sprouted brown rice, and sprouted soybeans; involves a simple treatment procedure that takes a short amount of time; and inhibits the generation of degradation-associated foul odors while maintaining the effective components in the sprouted cereal.
Means for Solving Problems

According to a first aspect of the present invention, there is provided a method for processing a sprouted cereal, in which an enzymatic activity in the sprouted cereal is reduced by bringing the sprouted cereal into contact with water vapor.

When a sprouted cereal is brought into contact with water vapor, the heat of the water vapor is transmitted to the various enzymes present in the sprouted cereal and thermal degeneration of these enzymes quickly takes place. The activity of these enzymes can thereby be reduced. This results in a reduction in the activity of enzymes such as lipoxygenase and protease in the sprouted cereal, and inhibition of the production of sources of a foul odor (T2N and aldehydes such as Strecker aldehydes) that is associated with degradation during storage of a sprouted cereal and processed products thereof. As a result, it becomes possible to maintain the quality of a sprouted cereal or processed product thereof for a longer period of time.
Furthermore, there are no particular restrictions to the sprouted cereal that can be used in the present invention and it is possible to use a commonly available sprouted cereal. Therefore, it is not necessary to screen for and grow malt having a low LOX activity and there is no risk of bringing about a large increase in cost.

In addition, the present invention uses water vapor, which has a higher heat conductivity and specific heat than air. Therefore, it is possible to reduce the activity of lipoxygenase and protease in a much shorter time than with the technology whereby treatment is performed in a warm current of air as cited in Patent Reference 1. Consequently, there is little chance that the sprouted cereal will be burned, and there is no risk of discoloration of the sprouted cereal or degradation due to lipid oxidation, and the like (degeneration and decomposition resulting in a reduction in the matrix of starch, and the like and effective components contained in the sprouted cereal). In particular, as will be made clear by the working examples presented later, as a result of this treatment, there is no reduction whatsoever in the γ-aminobutyric acid or glycine betaine that are attractive as the effective components contained in sprouted cereals. In addition, because of the high heat conductivity and specific heat of water vapor, large quantities of starting material (sprouted cereal) can be processed (heat treated) more uniformly and more quickly than by treatment using a warm current of air and the treatment procedure is therefore simple.

Furthermore, in the present invention there are cases in which there is also a reduction in activity of enzymes that are useful for processing a sprouted cereal, such as amylase. In such cases, a sufficient enzyme matrix is present and it is therefore possible to add and replenish the desired enzyme from outside the system when processing a sprouted cereal and perform an enzyme reaction. When this method is used, it is possible to easily control the reaction such that the optimal enzyme reaction occurs by adding predetermined amounts of various enzymes as desired. Consequently, according to the present invention it is possible to provide a sprouted cereal that can very easily be handled as a starting material for a food or drink product.

According to a second aspect of the present invention, the water vapor is superheated water vapor or saturated water vapor having a pressure of 0.15 MPa to 0.55 MPa (gauge pressure).

The above-mentioned water vapor is superheated or saturated water vapor having a pressure of 0.15 to 0.55 MPa (gauge pressure); therefore, the heat of the saturated water vapor is efficiently transmitted to the various enzymes present in the sprouted cereal by this pressure. As a result, it is possible to reduce the enzyme activity of these enzymes by the rapid thermal degeneration thereof.
Furthermore, when superheated water vapor or saturated water vapor having a pressure within a range of 0.15 MPa to 0.55 MPa (gauge pressure) is used, it is possible to more reliably prevent burning and discoloration of the sprouted cereal during processing (heat treatment). As a result, there is no chance that the commercial value of the sprouted cereal will be compromised after treatment and there is no chance that the use of the sprouted cereal after processing will be limited.

According to a third aspect of the present invention, the water vapor is superheated water vapor or saturated water vapor at a pressure of 0.20 MPa to 0.55 MPa (gauge pressure).

It is possible to inhibit discoloration of the sprouted cereal and to reliably reduce enzyme activity by bringing the sprouted cereal into contact with water vapor within this pressure range.

According to a fourth aspect of the present invention, the sprouted cereal is malt.

According to this aspect, when malt is used as the sprouted cereal, there is a reduction in enzyme activity of the malt after processing. As also occurs after processing, the matrix of starch, and the like, and the effective ingredients such as γ-aminobutyric acid in the malt are maintained. In addition, even if stored for a long period of time, the processed malt will not generate the foul odor of aldehydes or the like, and it will be very easy to handle the malt when processed as the starting material of a food or drink.
In particular, the use of malt that has been processed by the present invention as the starting material for the production of a beer drink results in a reduction in the activity of enzymes such as lipoxygenase and protease in the wort during production, and inhibition of the production of sources of foul odors (T2N and aldehydes such as Strecker aldehydes). Therefore, it is possible to maintain the quality of the beer drink for a longer period of time.

Protein decomposition by protease is inhibited, and this results in inhibition of the production of amino acids that are a type of flavor and aroma component and that become the basis of a robust flavor, and the like, making it possible to obtain wort that has a low amino acid content. As a result, it becomes possible to produce a beer drink with a refreshing taste and little robust flavor or coarse taste without using secondary starting materials such as starch or saccharified starch when producing a beer drink that uses the malt processed by the present invention.

According to a fifth aspect of the present invention, the malt is dry malt.

Dry malt is preferred because the shelf life of dry malt improves on being available, and because dry malt can be used to produce a food or drink (such as fermented drinks and thick malt syrup).

According to a sixth aspect of the present invention, a malt product is obtained by the processing method according to the fifth aspect.

The malt product of the present invention has reduced enzyme activity, but retains the matrix of starch, and the like and effective ingredients such as γ-aminobutyric acid; does not generate offensive odors from aldehydes, and the like, even with long-term storage; does not display particularly obvious discoloration; and is very easy to handle when being processed as a starting material for a food or drink.

According to a seventh aspect of the present invention, there is provided a malt product having an L value according to the Hunter Color Scale (Lab) of 75 or higher, and satisfying at least one of the following enzyme activities.
(a) A lipase activity of 285 U/g or less
(b) An α-Amylase activity of 182 U/g or less
(c) A β-Amylase activity of 733 U/g or less
(d) A protease activity of 2.63 U/g or less
(e) A lipoxygenase activity of 1.07 U/g or less

The specialty malts that have been used in the past in order to improve the taste of a food or drink use as the starting material malt products that have been obtained using secondary materials and outside enzymes and by controlling the enzyme activity contained in the malt.
These specialty malts are subjected to roasting, and the like; therefore, they turn brown or black in color. However, according to the present invention, it is possible to maintain a light color and easily improve the taste of the food or drink product.

According to an eighth aspect of the present invention, there is provided a malt product having an L value according to the Hunter Color Scale (Lab) of 75 or higher and satisfying at least one of the following enzyme activities.
(a) A post-treatment lipase activity that is 80.7% or less with respect to a pre-treatment lipase activity, the treatment involving water vapor being brought into contact with a sprouted cereal
(b) A post-treatment α-amylase activity of 88.2% or less with respect to a pre-treatment α-amylase activity, the treatment involving water vapor being brought into contact with a sprouted cereal
(c) A post-treatment β-amylase activity of 94.4% or less with respect to a pre-treatment β-amylase activity, the treatment involving water vapor being brought into contact with a sprouted cereal
(d) A post-treatment protease activity of 88.2% or less with respect to a pre-treatment protease activity, the treatment involving water vapor being brought into contact with a sprouted cereal
(e) A post-treatment lipoxygenase activity of 92.4% or less with respect to a pre-treatment lipoxygenase activity, the treatment involving water vapor being brought into contact with a sprouted cereal

When enzyme activity before treatment and enzyme activity after treatment are compared, it is possible to obtain a food or drink product having a light color and good taste as in the present invention.

According to a ninth aspect of the present invention, there is provided a food or drink where the malt product according to the sixth or seventh aspect is used as the starting material.

The food or drink of the present invention is capable of retaining quality for a longer period of time. Moreover, it has a reduced α-amino nitrogen content and trans-2-nonenal content; therefore, it is ideal for cases in which a reduction in robustness or coarse taste is necessary.

According to a tenth aspect of the present invention, there is provided a fermented malt drink, which is produced using the malt product according to the sixth or seventh characteristic as the starting material.

The food or drink of the present invention is capable of retaining quality for a longer period of time. Moreover, it has a reduced α-amino nitrogen content and trans-2-nonenal content; therefore, it is a fermented malt drink having a refreshing taste with no robustness or coarse taste.

According to an eleventh aspect of the present invention, the fermented malt drink is a beer, a sparkling liqueur, a liqueur, a low-alcohol drink, or a non-alcoholic drink.

Beers, sparkling liqueur, liqueurs, low-alcohol drinks, and nonalcoholic drinks are ideal as the fermented malt drink that is produced using as the starting material the malt drink cited in the sixth or seventh aspect.

According to a twelfth aspect of the present invention, there is provided a fermented malt drink wherein malt is used in a weight ratio of 66 to 100%, with a α-amino nitrogen concentration being 4.5 to 9.3 ppm, the EBC color being 4.2 to 16.3, and the trans-2-nonenal concentration being 0.07 to 0.31 ppb.

The fermented malt drink of the present structure can be produced by, for instance, using as the starting material dry malt obtained by treatment using water vapor at 0.20 to 0.55 MPa (gauge pressure), and a α-amino nitrogen concentration and trans-2-nonenal concentration are reduced while maintaining a light color (specified by EBC color); therefore, the drink has a refreshing taste with little robust flavor or coarse taste.

### BEST MODE FOR CARRYING OUT THE INVENTION

Modes for carrying out the invention are described below.

### [Mode]

The present invention is a method for processing sprouted cereal. Water vapor having a predetermined temperature and pressure is generated using an appropriate treatment device and this water vapor is brought into contact with a sprouted cereal, typically malt, and the like, under predetermined treatment conditions (such as treatment time and the like). As a result, there is a reduction in the activity of the various enzymes in the sprouted cereal.
Each structural element and treatment condition is described below.

### (Sprouted cereal)

Examples of sprouted cereals that can be used in the present invention are cereals that have sprouted, such as sprouted brown rice, wheat, barley (malt), soybeans, corn kernels, and the like. Examples of cereals are sprouted barley, wheat, rye, wild oats, oats, adlay, and other malted grains; rice; corn; Japanese millet; Italian millet; common millet; buckwheat; soy; adzuki beans; peas; broad beans; kidney beans; and the like, but the present invention is not limited to these examples.
Moreover, the "malt" that can be used in the present invention includes the "green malt" of malting that has sprouted as a resulting of immersion of seeds in water and the "dry malt" that is obtained by drying green malt. "Dry malt" is particularly preferred because it has a good shelf life and is itself generally available as a commercial product.
Furthermore, the method relating to the present invention can be used to produce a "specialty malt." For instance, as with barley malt, it is possible to use this method with the green malt or dry malt of wheat malt or rye malt. Peat malt and roasted malt are malts that are obtained by roasting and imparting a specific taste after treatment by the method of the present invention.

The sprouted cereal that can be used in the present invention includes whole sprouted cereal, fractions thereof (such as the albumen, germ, husk, and the like), and treated sprouted cereal or fractions thereof. There are no special restrictions to the treated product as long as it is a whole sprouted cereal or fraction thereof that has been subjected to some type of treatment. For instance, it can be the crushed product, pulverized product, ground product, dry product, freeze-dried product, or extract (including supercritical extract)of the sprouted cereal or fraction thereof; concentrate thereof, or solid content after extraction.

### (Enzyme)

The term "enzyme" in the present invention denotes an enzyme present in sprouted cereal. Examples include lipoxygenase, protease, α-amylase, β-amylase, and lipase, but the enzyme is not limited to these examples.

### (Water Vapor)

The water vapor that can be used in the present invention includes the vapor (water vapor, alcohol vapor, and the like) of liquids, such as distilled water, desalinated water, tap water, alkali ionized water, deep layer sea water, deionized water, deoxygenated water and water containing water-soluble organic compounds (such as alcohols) and inorganic salts. Superheated water vapor obtained by pressurizing these vapors, superheated water vapor at normal pressure, and high-pressure saturated water vapor are preferred.
The pressure of the above-mentioned high-pressure saturated water pressure is preferably approximately 0.15 MPa to 0.55 MPa. The term "pressure" in the present Specification means "gauge pressure." Consequently, when, for instance, "a pressure of 0.1 MPa" is converted to absolute pressure, it becomes pressure obtained by adding 0.1 MPa to atmospheric pressure.

### (Treatment conditions)

Treatment time is preferably approximately one second to several minutes, more preferably approximately three seconds to 24 seconds. It should be noted that it is preferred that treatment be performed in the presence of a low oxygen concentration.

### (Treatment device)

An example of a treatment device capable of performing the present invention is a treatment device having a conventional steam boiler capable of generating water vapor having a predetermined temperature and pressure as required and a heat-resistant, pressure-resistant reactor capable of withstanding high-temperature, high-pressure water vapor. Such a treatment device has a structure with which it is possible to introduce water vapor generated by a steam boiler to a reactor holding a sprouted cereal to be treated and bring the water vapor into contact with the sprouted cereal.
Furthermore, the reactor can be a batch reactor, or it can be a continuous reactor such as a rotary valve reactor or an extruder. For instance, it is possible to use a conventional fluidized-type high-pressure steam sterilizer or a continuous particle steam sterilizer.

Furthermore, the processed product of a sprouted cereal treated by the present invention (such as a malt product) can be used as the starting material for a food or drink, such as an alcoholic drink or a food product. Examples of alcoholic drinks are sprouted fermented malt drinks, such as beers, sparkling liqueurs, beer-like alcoholic drinks, and beer-like non-alcoholic drinks. Examples of foods products are juices, coffees, teas, malt drinks, and other refreshing drinks; confectioneries; breads; flours; noodles; cooked rice; processed foods; condiments; and the like. However, the food or drink of the present invention is not limited to these examples.

In particular, when the malt product treated by the present invention is used to produce a beer drink, the sprouted cereal is processed by being treated with water vapor such that there is a reduction in the activity of the enzyme that is active during processing of the sprouted cereal. Then, for instance, it is possible to replenish the necessary enzyme in the form of wort and promote the necessary enzyme reaction.
It should be noted that the enzyme can also be any edible enzyme. For instance, commercial amylase in the necessary amount is added to promote saccharification. Moreover, a commercial protease in the necessary amount is added and protein decomposition is promoted in order to produce an anima acid. Thus, it is possible to unrestrictedly adjust the amount of various components (saccharides, amino acids, and the like) present in the wort, according to the variety and amount of the added enzyme. As a result, it is also possible to adjust the amount of components grown from the yeast (saccharides, amino acids, and the like), and design beer drinks having a variety of flavors and aromas. That is, since the residue of the saccharides and amino acids utilized by yeast becomes the flavor and aroma of the beer drink, for instance, a beer drink having a refreshing taste with little robust or coarse taste is produced when the amino acid content is low.
With respect to the percentage of malt used, the enzyme activity of the malt product of the present invention is low when compared to that of ordinary (untreated) malt. Therefore, preferably the percentage of malt used by weight percentage is 50 to 100%, and more preferably 66 to 100%, such that there are none of the fermentation drawbacks that are the cause of incomplete saccharification.

Moreover, the enzyme that is added can be derived from untreated malt that has not been treated by the present invention. Malt contains a variety of enzymes, and the activity and amount of each enzyme varies. For example, the potency (relative activity) of amylases, which are saccharification enzymes, is high in comparison to the potency of protease and lipoxygenase. Consequently, it shall be apparent that when saccharification is performed by adding a small amount of untreated malt to malt that has been subjected to the processing of the present invention, less protease and lipoxygenase are derived from the untreated malt that is present. As a result, the reaction of these enzymes is inhibited and production of the aldehydes that are the source of offensive odors is prevented. That is, of the malts used as starting materials, it is possible to adjust the mixture ratio of malt treated by the method of the present invention and untreated malt to produce a variety of beer drinks having variations in the flavor and aroma derived from their amino acid content, and the like.

According to conventional methods for producing beer drinks, the matrix balance was adjusted by using secondary starting materials such as starches and saccharified starches in addition to the malt starting material in order to inhibit production of excess amino acid in the beer drink and produce a beer drink having a refreshing taste with little robust or coarse taste. However, according to the present invention it is possible to produce a beer drink having a refreshing taste with little robust flavor or coarse taste without using these additional starting materials.

### (Other Modes)

1. It is possible to add to the method for processing sprouted cereal of the present invention, as desired, a step for drying after the sprouted cereal has been treated with water vapor.

### Working Examples

The present invention will now be described in detail using working examples, but the present invention is not limited to these working examples.
What is referred to simply as "malt" in the working examples is dry malt derived from barley seeds. Moreover, unless otherwise noted, the unit "U" representing enzyme activity is the amount of enzyme capable of converting 1 µmol of matrix in one minute.

### (Working Example 1) Heat treatment of dry malt

Dry malt was treated by being brought into contact for 4.5 to 24 seconds with saturated steam at a pressure of 0.15 MPa to 0.32 MPa (gauge pressure) using a treatment device having a batch continuous-type high-pressure steam sterilizer (Kawasaki Co., Ltd., HTST-S600) and a steam boiler (Miura Co., Ltd., FH-100). Each sample (treated dry malt) was dried using a dry cooler device and then recovered and lipoxygenase activity (LOX activity), lipase activity, α-amylase activity, β-amylase activity, protease activity, and color were determined by the measurement methods described below. A panel conducted sensory tests on the smell of each sample. The smell sensory tests were conducted by a panel of 30 specialists. The presence of a burned odor, the presence of a cereal odor, the caramel aroma, and the cereal odor were evaluated as the evaluation parameters. The overall evaluation was based on these results.

Furthermore, untreated dry malt was measured in the same manner as the control. The results are shown in Table 1.
With regard to the enzyme activity values in Table 1, the top value shows the amount of enzyme per gram and the bottom value shows the relative value (%) when activity of each enzyme in the control was 100 (%). The value is less than 100 when the activity of the enzyme in the sample was lower than the activity of the enzyme in the control.

### [Method for determining LOX activity]

This activity is the lipoxygenase activity (LOX) of malt extracted using ice-cold acetic acid buffer. The reaction between the LOX and linoleic acid was calculated from the percentage increase within a predetermined time in the absorbance of the solution at a wavelength of 234 nm.
The measurements were performed using the following procedure in accordance with Japanese Laid-open Patent Application 2001-29097A.

### 1. Preparation of enzyme extract solution

Malt that had been crushed as desired was extracted using a predetermined amount of ice-cold acetic acid buffer and the solid content was removed by centrifugation to obtain the enzyme extract solution.

### 2. Reaction matrix solution

Predetermined amounts of TWEEN 20, linoleic acid, and aqueous sodium hydroxide solution were added to an ice-cold boric acid buffer, the mixture was subjected to ultrasonic dispersion under ice-cold conditions, and deionized water was added to the mixture to obtain the reaction matrix solution.

### 3. Determinations

The reaction matrix solution and enzyme extract were added in succession to a phosphoric acid buffer and shaken and stirred under ice-cold conditions, the absorbance at 234 nm was determined for five minutes using an absorbance meter kept at 25°C, and the LOX activity was determined from the percentage increase in absorbance for one minute.

### (Determination of lipase activity)

The commercial Lipase Kit S (Dainippon Pharmaceutical Co., Ltd.) was used.

### [Determination of α-amylase activity]

The commercial kit Ceralpha Method (Megazyme International Ireland Limited) was used.
The principle behind α-amylase activity determination using this kit is as follows.
Block *p*-nitrophenyl malt heptoxide (BPNPG7) serves as the matrix and α-amylase extracted from the sample is added thereto. The resulting *p*-nitrophenyl malt saccharide is decomposed by heat-resistant α-glucosidase. The reaction is stopped using trisodium phosphate. The resulting *p-*nitrophenol emits phenolate light and absorbance is therefore determined at 410 nm (McCleary, B. V. and Sheehan, H. (1987) Journal of Cereal Science, 6, 237-251. Sheehan, H. and McCleary, B. V. (1988) Biotechnology Techniques, 2, 289-292.)

### [Determination of β-amylase activity]

The commercial kit Betamyl Method (Megazyme International Ireland Limited) was used.
The principle behind β-amylase activity determination using this kit is shown below.
Betamyl (*p*-nitrophenyl malt pentose; PNPG5) solution in which a high level of α-glucosidase is present is reacted with an enzyme extracted from the sample and the matrix is decomposed. Trizma base is added to this solution to stop the reaction and promote coloration, and absorbance of the p-nitrophenol released from the matrix is determined (Mathewson, P. R. and Seabourn, B. W. (1983) Journal of Agriculture and Food Chemistry. 31, 1322-1326. McCleary, B. V. and Codd, R. (1987) Journal of Cereal Science, 9, 17-33. Santos, M. M. and Rutsn, P. (1996) Journal of the Institute of Brewing, 102, 271-275.).

### [Method of determining protease activity]

An acidic carboxypeptidase determination kit (Kikkoman Corporation) was used to determine protease activity. Potency was found in terms of isolating 1 µmol of alanine from a synthetic matrix in one minute (the enzyme activity was 1 U).

### [Method for determining color)

Fifty grams of malt was crushed with a mill and L (lightness), a (red), and b (yellow) were determined using the Hunter color chart (Lab) and a colorimeter (Nippon Denshoku Industries Co., Ltd., SE-2000). Three grams of crushed malt was used in the determinations. Taking into consideration variations in determinations, each parameter was determined three times and the average was used. It should be noted that a higher L (lightness) number denotes a lighter color. A larger a (red) number denotes a redder color when the number is positive, and a greener color when the number is negative. A larger b (yellow) number denotes a yellower color when the number is positive and a bluer color when the number is negative.

**Table 1**

| Sample No. | Treatment pressure (MPa) | Reactor internal temperature (°C) | Reaction time (seconds) | LOX activity (U/g) (%) | Lipase activity (U/g) (%) | α-AMY(^{*}) activity (U/g) (%) | β-AMY(^{*}) activity (U/g) (%) | Protease activity (U/g) (%) | Color L | Color a | Color b | Smell sensory test |
|---|---|---|---|---|---|---|---|---|---|---|---|---|
| Control | None | None | None | 1.16 (100) | 353 (100) | 206 (100) | 776 (100) | 2.98 (100) | 80.43 | 0.51 | 11.90 | |
| 1 | 0.15 | 128.2 | 4.5 | 1.07 (92.4) | 231 (65.3) | 182 (88.2) | 670 (86.3) | 2.63 (88.2) | 79.00 | 0.62 | 12.67 | Same smell as control |
| 2 | 0.20 | 133.0 | 4.5 | 0.99 (85.2) | 160 (45.2) | 135 (65.3) | 623 (80.3) | 2.31 (77.6) | 79.61 | 0.62 | 12.23 | Same smell as control |
| 3 | 0.32 | 143.2 | 4.5 | 0.91 (78.2) | 123 (34.8) | 78 (37.8) | 338 (43.5) | 1.68 (56.3) | 76.33 | 0.55 | 11.35 | Same smell as control |
| 4 | 0.20 | 133.0 | 4.5 | 0.99 (85.2) | 160 (45.2) | 135 (65.3) | 623 (80.3) | 2.31 (77.6) | 79.26 | 0.59 | 11.56 | Same smell as control |
| 5 | 0.20 | 143.1 | 9.0 | 0.66 (56.9) | 69 (19.6) | 123 (59.5) | 525 (67.7) | 1.94 (65.2) | 77.65 | 0.56 | 12.33 | Same smell as control |
| 6 | 0.20 | 132.0 | 24.0 | 0.45 (38.6) | 40 (11.2) | 80 (38.8) | 285 (36.7) | 1.29 (43.3) | 75.23 | 0.61 | 14.31 | Faint sweet smell |
| 7 | 0.32 | 143.2 | 4.5 | 0.91 (78.2) | 123 (34.8) | 78 (37.8) | 338 (43.5) | 1.68 (56.3) | 80.33 | 0.64 | 11.65 | Same smell as control |
| 8 | 0.32 | 143.4 | 9.0 | 0.45 (38.6) | 107 (30.4) | 68 (33.2) | 286 (36.8) | 1.46 (48.9) | 79.92 | 0.56 | 12.33 | Same smell as control |
| 9 | 0.32 | 143.9 | 24.0 | 0.45 (38.6) | 38 (10.9) | 67 (32.4) | 274 (35.3) | 1.15 (38.6) | 77.36 | 0.65 | 14.65 | Faint sweet smell |

| | | | | | | | | | | | | |
|---|---|---|---|---|---|---|---|---|---|---|---|---|
| *AMY is the abbreviation for amylase. | | | | | | | | | | | | |

As shown in Table 1, according to the dry malt treated by the present method, coloration was suppressed while the activity of a variety of enzymes was reduced. However, when treated at 0.15 MPa, the percentage reduction in activity was relatively small. Therefore, it is preferred that treatment be performed using water vapor having a pressure of 0.20 MPa or higher in order to reliably reduce the enzyme activity of a sprouted cereal.

### Working Example 2 Production of wort

After each malt (control and samples 1 through 9) obtained by treatment in above-mentioned working Example 1 had been crushed, the product was saccharified and filtered to obtain wort. The FAN, EBC color and furfural of the resulting wort of each of the samples were measured using the methods described below and sensory tests of smell were conducted by a panel. Table 2 shows the results.

### Method for measuring FAN (α-amino nitrogen)

α-amino acids were measured by utilizing the fact that when 2,4,6-trinitrobenzenesulfonic acid (TNBS) reacts with free α-amino acids, the resulting compound has maximum absorbance when acidic. In the measurements, the maximum absorption was a spectrophotometer wavelength of 340 nm. Specifically, the sample was appropriately diluted, phosphate buffer and TNBS solution were added to the product and kept for a predetermined time at a predetermined temperature, a solution was added to stop the reaction, and the absorbance was determined. This absorbance was compared with an analytical curve obtained from an aqueous glycine reference solution of a known concentration, the α-amino acid nitrogen concentration (ppm) of the sample was calculated, and the amount of resulting amino acid was evaluated.
The numbers (%) in Table 2 are the relative values (%) when the α-amino acid nitrogen concentration of the control was 100 (%).

### Method for measuring EBC color

Single color absorbance at 430 nm was determined using a sample having the spectral properties of clear wort displaying no turbidity and the EBC color was obtained by multiplying that number by a factor (25).
EBC color = [430 nm absorbance] × 25

### Method for measuring furfural

1 mL of wort was passed through a filter having a pore size of 0.45 µ (Millipore) and 10 µL was subjected to HPLC analysis. Analysis was performed using a Deverosil-C30-UG5 (Nomura Chemical Col., Ltd., 4.6 × 150 mm) column with the HPLC system CLASS-VP series (Shimadzu Corporation). The analysis conditions were 0.05% TFA (trifluoroacetic acid) aqueous solution as solution A, 0.05% TFA/90% acetonitrile solution as solution B, and a linear gradient for 100 minutes from 0% to 20% of solution B at a current velocity of 1.0 mL/min. Detection was performed using UV absorption at a wavelength of 300 nm.

**[Table 2]**

| Sample No. | FAN (%) | EBC color | Furfural HMF (ppm/ex) | Smell sensory tests |
|---|---|---|---|---|
| Control | 100 | 7.9 | 0.86 | |
| 1 | 85.3 | 8.2 | 1.01 | Same smell as control |
| 2 | 77.2 | 7.8 | 1.11 | Same smell as control |
| 3 | 62.2 | 8.5 | 1.22 | Same smell as control |
| 4 | 77.2 | 8.3 | 1.11 | Same smell as control |
| 5 | 60.2 | 8.5 | 1.26 | Same smell as control |
| 6 | 33.2 | 8.9 | 2.34 | Same smell as control |
| 7 | 77.5 | 8.2 | 1.22 | Same smell as control |
| 8 | 53.2 | 8.6 | 1.26 | Same smell as control |
| 9 | 45.3 | 9.2 | 2.53 | Same smell as control |

### (Working Example 3)

### Production of beer drink

Hops was added to each of the wort samples obtained in Working Example 2 (control and samples 1 through 9), the mixture was boiled and cooled, then yeast for brewing beer was added and fermented, and a beer drink was obtained. The FAN, EBC color, degree of degradation (for three weeks at 28°C), and amount of T2N of the resulting beer drink of each sample were determined by the following measurement methods. Table 3 shows the results.

### Method for determining degree of degradation

The degree of degradation was evaluated by a sensory test conducted by a panel of specialists. They evaluated the beer drinks for the presence of a burned odor, the presence of a cereal odor, a caramel aroma, an unpleasant cereal odor, a T2N smell, and the like. The beer drinks were evaluated in five steps, with 0 being a fresh state with no degradation odor. Degradation increased as the numbers increased.

### Method for determining the amount of T2N

T2N is trans-2-nonenal. T2N exists as a free form and a bound form (bound to proteins and polyphenol), but in this invention T2N refers to the total amount of these.
The T2N concentration of a beer drink was determined by the following method.
(1) 80 g of a beer drink was subjected to nitrogen bubbling (for 30 minutes).
(2) The liquid in (1) was maintained at 100°C for 120 minutes.
(3) Forty grams of the liquid in (2) was extracted with the solid phase extraction Sep-Pack C8 (Waters Corporation).
(4) After rinsing with water, the product was eluted with 2 ml of methanol.
(5) 200 µL of hydrazine and 300 µL of 33% acetic acid were added to (4) and the mixture was subjected to HPLC analysis at 25°C for two hours.

**[Table 3]**

| Sample No. | FAN (ppm) | EBC color | Degree of degradation (3 weeks at 28°C) | T2N (ppb) |
|---|---|---|---|---|
| Control | 14.3 | 8.3 | 1.1 | 0.87 |
| 1 | 10.2 | 8.3 | 0.8 | 0.67 |
| 2 | 8.6 | 8.4 | 0.71 | 0.31 |
| 3 | 7.3 | 7.6 | 0.46 | 0.27 |
| 4 | 8.6 | 8.4 | 0.71 | 0.31 |
| 5 | 7.7 | 7.9 | 0.65 | 0.27 |
| 6 | 7.5 | 9.8 | 0.48 | 0.19 |
| 7 | 7.3 | 7.6 | 0.46 | 0.27 |
| 8 | 5.25 | 8.2 | 0.39 | 0.23 |
| 9 | 5.5 | 9.8 | 0.43 | 0.21 |

### (Working Example 4) Heat treatment of dry malt

Dry malt was treated by being brought into contact for four seconds with saturated water vapor at a pressure of 0.2 MPa to 1.0 MPa (gauge pressure) using a continuous-type particle steam sterilizer (Okawara MFG. Co., Ltd.; SIRV-20) and a steam boiler (Miura Co., Ltd., FH-100). During this treatment, the pocket fill rate of the SIRV rotary valve was brought to 30% and the starting material feed rate was set in accordance with each fill rate. Starting materials were fed using a belt feeder. Each sample was dried by being passed through a dry cooler and then recovered. Lipoxygenase activity (LOX activity), lipase activity, α-amylase activity, β-amylase activity, protease activity, and color were determined by the same measurement methods as in Working Example 1. Furthermore, smell sensory tests were conducted by a panel. It should be noted that untreated dry malt was subjected to similar determinations as the control. Table 4 shows the results.

**[Table 4]**

| Sample No. | Treatment pressure (MPa) | Reactor internal temperature (°C) | Reaction time (seconds) | LOX activity (U/g) (%) | Lipase activity (U/g) (%) | α- AMY(^{*}) activity (U/g) (%) | β-AMY(^{*}) activity (U/g) (%) | Protease activity (U/g) (%) | Color L | Color a | Color b | Smell sensory test |
|---|---|---|---|---|---|---|---|---|---|---|---|---|
| Control | None | None | None | 1.16 (100) | 353 (100) | 206 (100) | 776 (100) | 2.98(100) | 80.43 | 0.51 | 11.90 | |
| 1 | 0.20 | 133 | 4 | 1.01 (87.2) | 285 (80.7) | 128 (62.0) | 733 (94.4) | 2.56 (86.0) | 79.68 | 0.41 | 11.66 | Same smell as control |
| 2 | 0.30 | 143 | 4 | 0.82 (70.9) | 277 (78.4) | 118 (57.5) | 733 (94.4) | 2.44 (82.0) | 79.55 | 0.56 | 11.43 | Same smell as control |
| 3 | 0.35 | 148 | 4 | 0.71 (61.0) | 277 (78.4) | 103 (50.0) | 621 (80.0) | 2.18 (73.0) | 79.09 | 0.43 | 11.56 | Same smell as control |
| 4 | 0.40 | 152 | 4 | 0.61 (52.3) | 239 (67.8) | 77 (37.5) | 500 (64.4) | 2.09 (70.0) | 79.72 | 0.43 | 11.56 | Same smell as control |
| 5 | 0.45 | 155 | 4 | 0.21 (18.1) | 219 (62.0) | 46 (22.5) | 270 (34.8) | 1.85 (62.0) | 77.55 | 0.80 | 12.03 | Same smell as control |
| 6 | 0.50 | 159 | 4 | 0.35 (0.3) | 176 (49.8) | 26 (12.6) | 125 (16.1) | 1.67 (56.0) | 78.23 | 0.77 | 11.89 | Same smell as control |
| 7 | 0.55 | 162 | 4 | 0.35 (0.3) | 118 (33.5) | 14 (6.7) | 89 (11.5) | 1.52 (51.0) | 78.00 | 0.74 | 12.95 | Same smell as control |
| 8 | 0.60 | 165 | 4 | 0 (0) | 48 (13.5) | 0 (0) | 18 (2.3) | 0.69 (23.0) | 77.65 | 0.71 | 13.21 | Same smell as control |
| 9 | 1.00 | 184 | 4 | 0 (0) | 1 (0.3) | 0 (0) | 0 (0) | 0 (0.3) | 75.33 | 0.62 | 14.99 | Faint sweet smell |

| | | | | | | | | | | | | |
|---|---|---|---|---|---|---|---|---|---|---|---|---|
| *AMY is the abbreviation for amylase. | | | | | | | | | | | | |

### (Working Example 5) Production of wort

Each wort obtained by the treatment according to Working Example 4 (control and samples 1 through 9) was crushed, and the product was saccharified and filtered to obtain wort. With the exception of the amount of T2N, the same measurement methods as in Working Example 2 were used to determine the FAN, EBC color, and furfural of the wort of each of the resulting samples.
The amount of T2N was determined by the method in Working Example 3 using the wort in place of the beer drink. Specifically:
(1) 20 g of wort was diluted to 60 g using 100 mM sodium citrate buffer having a pH of 4.0.
(2) Nitrogen bubbling was performed (for 30 minutes).
(3) The liquid in (2) was maintained at 120°C for 30 minutes.
(4) Forty grams of the liquid in (3) was extracted with the solid phase extraction Sep-Pack C8 (Waters Corporation).
(5) After rinsing with water, the product was eluted with 2 ml of methanol.
(6) 200 µL of hydrazine and 300 µL of 33% acetic acid were added to (5) and the mixture was subjected to HPLC analysis at 25°C for two hours.
   Table 5 shows the results when a panel conducted sensory tests of the smell of the wort samples.

**[Table 5]**

| Sample No. | FAN (%) | EBC color | T2N (ppb) | Furfural HMF (ppm/ex) | Smell sensory tests |
|---|---|---|---|---|---|
| Control | 100 | 8.6 | 5.03 | 0.86 | |
| 1 | 75.4 | 8.3 | 2.50 | 1.22 | Same smell as control |
| 2 | 70.6 | 8.5 | 0.60 | 1.23 | Same smell as control |
| 3 | 67.5 | 8.7 | 1.10 | 1.33 | Same smell as control |
| 4 | 68.3 | 8.9 | 2.12 | 1.48 | Same smell as control |
| 5 | 65.5 | 9.4 | 2.30 | 1.99 | Same smell as control |
| 6 | 61.2 | 8.9 | 1.83 | 2.11 | Same smell as control |
| 7 | 60.4 | 9.9 | 2.36 | 2.18 | Same smell as control |
| 8 | 43.2 | 11.3 | 2.33 | 5.23 | Same smell as control |
| 9 | 23.2 | 12.6 | 3.56 | 10.60 | Same smell as control (but with a slightly sweet aroma) |

### (Working Example 6) Production of beer drink

Hops was added to each of the wort samples obtained in Working Example 5 (control and samples 1 through 9), the mixture was boiled and cooled, then yeast for brewing beer was added and fermented, and a beer drink was obtained. The FAN, EBC color, degree of degradation (three weeks at 28°C), and amount of T2N of the resulting beer drink of each sample were determined by the same measurement method as in Working Example 3. Table 6 shows the results.

**[Table 6]**

| Sample No. | FAN (ppm) | EBC color | Degree of degradation (3 weeks at 28°C) | T2N (ppb) |
|---|---|---|---|---|
| Control | 14.9 | 8.3 | 0.75 | 0.53 |
| 1 | 9.3 | 7.3 | 0.61 | 0.30 |
| 2 | 9.2 | 7.6 | 0.55 | 0.18 |
| 3 | 8.6 | 6.9 | 0.56 | 0.09 |
| 4 | 8.6 | 7.2 | 0.44 | 0.13 |
| 5 | 7.9 | 7.1 | 0.47 | 0.19 |
| 6 | 7.9 | 8.6 | 0.44 | 0.12 |
| 7 | 7.5 | 9.5 | 0.42 | 0.08 |
| 8 | 7.2 | 12.5 | 0.41 | 0.08 |
| 9 | 6.3 | 16.3 | 0.33 | 0.07 |

### (Comparative Example 1)

Dry malt was subjected to conventional roasting treatment by a warm current of air at a predetermined temperature to produce melanoidine malt and caramel malt as Comparative Example 1. The resulting melanoidine malt and caramel malt were then measured for lipoxygenase activity (LOX activity), lipase activity, α-amylase activity, β-amylase activity, protease activity, and color by the same measurement methods as in Working Example 1. A sensory test of smell was also performed by a panel. It should be noted that untreated dry malt was subjected to the same determinations as the control. Table 7 shows the results.

**[Table 7]**

| Sample No. | Treatment pressure (MPa) | Reaction time (hrs) | LOX activity (U/g) (%) | Lipase activity (U/g) (%) | α-AMY(*) activity (U/g) (%) | β-AMY(*) activity (U/g) (%) | Protease activity (U/g) (%) | Color L | Color a | Color b | Smell sensory test |
|---|---|---|---|---|---|---|---|---|---|---|---|
| Control | None | None | 1.16 (100) | 353 (100) | 206 (100) | 776 (100) | 2.98 (100) | 80.43 | 0.51 | 11.90 | |
| Melanoidine malt | 100 to 130 | 2 to 6 | 0.14 (12) | 286 (81) | 37 (18) | 272 (35) | 2.18 (73) | 67.98 | 3.41 | 19.08 | Heated sweet aroma and faint oxidation odor |
| Caramel malt | 130 to 160 | 2 to 6 | 0 (0) | 0 (0) | 0 (0) | 0 (0) | 0 (0) | 47.77 | 7.26 | 18.47 | Heated sweet aroma, faint burned odor and lipid oxidation odor |

| | | | | | | | | | | | |
|---|---|---|---|---|---|---|---|---|---|---|---|
| *AMY is the abbreviation for amylase. | | | | | | | | | | | |

Next, each of the malts (control, melanoidine malt, caramel malt) was crushed and the product was saccharified and filtered to obtain wort. The FAN, EBC color, amount of T2N, and furfural of the wort of each resulting sample was determined by the same measurement method as in Working Example 2. Sensory tests of smell were also performed by a panel. Table 8 shows the results.

**[Table 8]**

| Sample No. | FAN (%) | EBC color | T2N (ppb) | Furfural HMF (ppm/ex) | Smell sensory test |
|---|---|---|---|---|---|
| Control | 100 | 8.6 | 5.03 | 0.86 | |
| Melanoidine malt | 44 | 34.5 | 7.80 | 23.50 | Heated sweet aroma |
| Caramel malt | 41 | 45.1 | 8.90 | 28.30 | Heated sweet aroma and faint burned odor |

### (Working Example 7)

In Working Example 7, barley, dry malt (sprouted cereal), caramel malt, melanoidine malt, and the malts of Samples No. 1, 5, and 9 in Working Example 4 (malt treated by the present invention) as the control were measured for γ-aminobutyric acid content and glycine betaine content using the following methods. Table 9 shows the results.
Method for measuring γ-aminobutyric acid
A 1:10 dilution of wort was prepared using pure water and quantitative determination was performed using an L-8800 high-speed amino acid analyzer (Hitachi).
Method for measuring Glycine betaine
The wort was filtered using a 0.45 µm filter, and was then subjected to HPLC using the Develosil ODS5 (Nomura Chemical Co., Ltd.). This analysis involved quantitative determination using a differential refractometer with 5% methanol as the solvent (Mutation Research, 439 (1999) 267-276).

**[Table 9]**

| | γ-Aminobutyric acid content(mg/100g) | Glycine betaine content(mg/100g) |
|---|---|---|
| Malt | 3.1 | 3.6 |
| Dry malt | 24.4 | 32.1 |
| Conventional roasted malt (caramel malt) | 13.4 | 26.4 |
| Conventional roasted malt (melanoidine malt) | 10.6 | 28.3 |
| Malt treated by present invention (sample No. 1) | 24.2 | 31.8 |
| Malt treated by present invention (sample No. 5) | 22.1 | 31.8 |
| Malt treated by present invention (sample No. 9) | 22.3 | 31.4 |

As shown in Table 9, the unsprouted malt contains only a small amount of γ-aminobutyric acid and glycine betaine, which are effective components in cereals. The content increases considerably with sprouting. However, when conventional malt processing was performed, the content decreased considerably. On the other hand, when the method of the present invention was used, the amounts of post-treatment γ-aminobutyric acid and glycine betaine of dry malt were maintained at the same level as the pre-treatment levels.

(Working Example 8) Example of producing fermented drink wherein the percentage of malt used by weight ratio is 66%
A fermented malt drink wherein the percentage of malt used is 66% was prepared as follows. Specifically, wort was obtained by the method in Working Example 5 using as the starting materials 34% of a commercial enzyme saccharified syrup and 66% of a malt treated under the same conditions as in Sample No. 6 (treatment at 0.50 MPa and 159°C for 4 seconds) of the treated dry malts obtained in Working Example 4. The wort was used to prepare a fermented drink using the method in Working Example 6. A fermented drink wherein 66% of untreated malt was used was prepared as the control.

Table 10 shows the results of evaluating the fermented drink. No production problems such as fermentation defects were found when a fermented drink wherein the percentage of malt used (sample No. 6 of Working Example 4) was 66% was prepared without adding an outside enzyme. Moreover, the free amino acid concentration and T2N concentration of the resulting fermented drink were lower than those of the control and the drink was a light color.
When the results of Working Example 6 and Working Example 8 are compared, it is at least clear that when the malt processed product of the present invention is used as the starting material and the percentage of malt used is within a range of approximately 66 to 100%, the product is a good fermented drink having a light color and a lower free amino acid concentration and T2N concentration than when untreated malt is used as the starting material.

**[Table 10]**

| Sample name | FAN (ppm) | EBC color | T2N (ppb) |
|---|---|---|---|
| Control | 9.4 | 4.2 | 0.36 |
| No.6 | 4.5 | 4.2 | 0.09 |

### (Working Example 9) Heat treatment of dry sprouted brown rice

Dry malt was treated by being brought into contact for four seconds with saturated water vapor at a pressure of 0.20 MPa to 1.00 MPa (gauge pressure) using a continuous-type particle steam sterilizer (Okawara MFG. Co., Ltd.; SIRV-20) and a steam boiler (Miura Co., Ltd., FH-100). The pocket fill rate of the SIRV rotary valve was brought to 30% and the starting material feed rate was set in accordance with each fill rate. Starting materials were fed with a belt feeder.
Each starting material was dried by being passed through a dry cooler and then recovered. α-Amylase activity and protease activity were determined using the same measurement methods as in Working Example 1. Furthermore, smell sensory tests were conducted by a panel. It should be noted that untreated dry malt was subjected to similar determinations as the control. Table 11 shows the results.

**[Table 11]**

| Sample No. | Treatment pressure (MPa) | Reactor internal temperature (°C) | Reaction time (seconds) | α-Amylase activity (U/g) (%) | Protease activity (U/g) (%) | Smell sensory test |
|---|---|---|---|---|---|---|
| Control | None | None | None | 206 | 2.98 | |
| 1 | 0.2 | 133 | 4 | 155 | 2.54 | Same as control |
| 2 | 0.6 | 165 | 4 | 26 | 0.78 | Same as control |
| 3 | 1.0 | 184 | 4 | 7 | 0.24 | Faint sweet aroma |

### (Working Example 10) Heat treatment of dry sprouted soybeans

Dry sprouted soybeans were treated by being brought into contact for 10 seconds with saturated water vapor at a pressure of 0.15 MPa to 0.32 MPa using a treatment device having a continuous-type high-pressure steam sterilizer (Kawasaki Co., Ltd., HTST-A600) and a steam boiler (Miura Co., Ltd., FH-100). Each sample (treated dry sprouted soybeans) was dried using a dry cooler and then recovered. Lipase activity and lipoxygenase activity were determined by the same measurement methods as in Working Example 1. Furthermore, smell sensory tests were conducted by a panel. were subjected to similar determinations as the control. Table 12 shows the results.

**[Table 12]**

| Sample No. | Treatment pressure (MPa) | Reactor Reaction internal temperature (°C) | Reaction time (seconds) | LOX activity (U/g) | Lipase activity (U/g) (%) | Smell sensory test |
|---|---|---|---|---|---|---|
| Control | None | None | None | 1.16 | 353 | |
| 1 | 0.15 | 128 | 10 | 0.79 | 119 | Same as control |
| 2 | 0.20 | 133 | 10 | 0.53 | 30 | Same as control |
| 3 | 0.32 | 143 | 10 | 0.44 | 37 | Same as control |

## Claims

1. A method for processing a sprouted cereal, in which an enzymatic activity in the sprouted cereal is reduced by bringing the sprouted cereal into contact with water vapor.

2. The method for processing a sprouted cereal according to claim 1, in which the water vapor is superheated water vapor or saturated water vapor having a pressure of 0.15 MPa to 0.55 MPa (gauge pressure).

3. The method for processing a sprouted cereal according to claim 1, in which the water vapor is superheated water vapor or saturated water vapor at a pressure of 0.20 MPa to 0.55 MPa (gauge pressure).

4. The method for processing a sprouted cereal according to any of claims 1 through 3, wherein the sprouted cereal is malt.

5. The method for processing a sprouted cereal according to claim 4, wherein the malt is dry malt.

6. A malt product, which is obtained by the processing method according to claim 5.

7. A malt product, which has an L value according to the Hunter Color Scale (Lab) of 75 or higher, and which satisfies at least one of the following enzyme activities.
(a) A lipase activity of 285 U/g or less
(b) An α-Amylase activity of 182 U/g or less
(c) A β-Amylase activity of 733 U/g or less
(d) A protease activity of 2.63 U/g or less
(e) A lipoxygenase activity of 1.07 U/g or less

8. A malt product, which has an L value according to the Hunter Color Scale (Lab) of 75 or higher and satisfies at least one of the following enzyme activities.
(a) A post-treatment lipase activity that is 80.7% or less with respect to a pre-treatment lipase activity, the treatment involving water vapor being brought into contact with a sprouted cereal
(b) A post-treatment α-amylase activity of 88.2% or less with respect to a pre-treatment α-amylase activity, the treatment involving water vapor being brought into contact with a sprouted cereal
(c) A post-treatment β-amylase activity of 94.4% or less with respect to a pre-treatment β-amylase activity, the treatment involving water vapor being brought into contact with a sprouted cereal
(d) A post-treatment protease activity of 88.2% or less with respect to a pre-treatment protease activity, the treatment involving water vapor being brought into contact with a sprouted cereal
(e) A post-treatment lipoxygenase activity of 92.4% or less with respect to a pre-treatment lipoxygenase activity, the treatment involving water vapor being brought into contact with a sprouted cereal

9. A food or drink product, wherein the malt product according to claim 6 or 7 is used as a starting material.

10. A fermented malt drink, wherein the malt product according to claim 6 or 7 is used as a starting material.

11. The fermented malt drink according to claim 10, which is a beer, a sparkling liqueur, a liqueur, a low-alcohol drink, or a non-alcoholic drink.

12. A fermented malt drink wherein malt is used in a weight ratio of 66 to 100%; the fermented malt drink having a free α-amino acid nitrogen concentration of 4.5 to 9.3 ppm, an EBC color of 4.2 to 16.3, and a *trans*-2-nonenal concentration of 0.07 to 0.31 ppb.
